# EUROPÄISCHE PATENTANMELDUNG

(11) **EP 3 101 061 A1**
(43) Veröffentlichungstag der Anmeldung: **07.12.2016**
(21) Anmeldenummer: 15170786.6
(22) Anmeldetag: 05.06.2015
(51) Int. Cl.: C08J 9/00, C08L 75/04, C08K 3/18, A47C 27/14

(54) **POLYURETHANWEICHSCHAUMSTOFF**

(71) Anmelder: Breckle Matratzenwerk Weida GmbH, 07570 Weida OT Hohenölsen (DE)
(72) Erfinder: Rametsteiner, Karl, 4040 Linz (AT)
(74) Vertreter: Patentanwaltskanzlei Hübscher

(57) **Zusammenfassung**

Es wird ein Polyurethanweichschaumstoff mit Einlagerungen von hydrophilen Polymeren mit ausgeprägten Wasserstoffbrücken und gegebenenfalls von Zusatzstoffen beschrieben. Um den Befall durch Mikroorganismen zu unterbinden, wird vorgeschlagen, dass zusätzlich zu den Einlagerungen der hydrophilen Polymere mineralische Additive aus der Gruppe von Metalloxiden, Hydroxiden und Carbonaten einerseits des Magnesiums und des Aluminiums und anderseits des Zinks eingebettet sind.

## Beschreibung

Die Erfindung bezieht sich auf einen Polyurethanweichschaumstoff mit Einlagerungen hydrophiler Polymere mit ausgeprägten Wasserstoffbrücken und gegebenenfalls von Zusatzstoffen.

Insbesondere beim Einsatz von Polyurethanweichschaumstoffen für Matratzen werden an den Polyurethanweichschaumstoff besondere Anforderungen hinsichtlich der Wasseraufnahme- und Wasserabgabefähigkeit gestellt. Es soll nicht nur die während der Schlafphase von einem Bettbenützer an die Matratze abgegebene Feuchtigkeit problemlos aufgenommen, sondern auch diese aufgenommene Feuchtigkeit vor einer neuerlichen Bettbenützung wieder abgegeben werden können. Zu diesem Zweck ist es bekannt (WO 2010/083548 A1), den Polyurethanweichschaumstoff mit einem hydrophilen Mittel aus Zellulose zu versetzen, die ausgeprägte Wasserstoffbrücken mit der Folge eines hohen Wasserbindungsvermögens bildet. Wegen dieses Wasserbindungsvermögens durch die Wasserstoffbrücken steht die aufgenommene Feuchtigkeit nur beschränkt für den organischen Stoffwechsel von Bakterien, Algen, Hefepilzen und damit auch für Milben zur Verfügung, was sich in einem messbar geringeren Wachstum dieser Lebewesen bemerkbar macht. Zur weiteren Bekämpfung der Mikroorganismen können Bakterizide, Fungizide, Akarizide und Algizide verwendet werden, deren Einsatz jedoch aufgrund ihrer toxischen Wirkungen einer zunehmenden Beschränkung unterliegt.

Der Erfindung liegt somit die Aufgabe zugrunde, einen hydrophilen Polyurethanweichschaumstoff anzugeben, der trotz seiner hohen Wasseraufnahmefähigkeit den Befall durch Parasiten, insbesondere von Einzellern und Milben, weitgehend unterbindet, ohne Biozide einsetzen zu müssen.

Ausgehend von einem Polyurethanweichschaumstoff der eingangs geschilderten Art löst die Erfindung die gestellte Aufgabe dadurch, dass zusätzlich zu den Einlagerungen der hydrophilen Polymere mineralische Additive aus der Gruppe von Metalloxiden, Hydroxiden und Carbonaten einerseits des Magnesiums und des Aluminiums und anderseits des Zinks eingebettet sind.

Durch die Zugabe dieser Additive wird in überraschender Weise der Befall des Polyurethanweichschaumstoffs durch Einzeller und Milben weitgehend unterbunden, insbesondere wenn diese Additive eine hexagonale oder trikline bzw. trigonale Kristallstruktur aufweisen und als Metalloxide bzw. -hydroxide in Wasser basisch reagieren. Die trikline bzw. hexagonale Kristallstruktur korreliert gut mit dem Dipolbindungswinkel von 105° des Wassers und erklärt die Wasserbindung, die über die durch große Oberflächen allgemein beobachtbare Adsorption deutlich hinausgeht. Der erfindungsgemäße Polyurethanweichschaumstoff bindet das Wasser außerdem nur kurzfristig und gibt die Feuchtigkeit ausschließlich dampfförmig ab. Aufgrund der nachhaltigen Minderung des Einzellerbefalls des Polyurethanweichschaumstoffs ergibt sich auch eine extreme Reduktion der Milbenpopulation, weil die Milben auf die Symbiose mit Einzellern, insbesondere mit Pilzen und deren Sporen, angewiesen sind.

Als hydrophile Polymere mit ausgeprägten Wasserstoffbrücken eignen sich insbesondere Polymere aus einer Polymergruppe, die natürliche und synthetische Polyamide, Polymere der Glucose, Polymere des Glucosamins und Lignin umfasst, wobei der Anteil der eingesetzten hydrophilen Polymere am Gesamtgewicht des Polyurethanweichschaumstoff zwischen 1 und 25 %, vorzugsweise zwischen 3 und 10 % liegt. Als natürliche Polyamide kommen vor allem Seide und Wolle in Frage. Stärke, Dextrin und vorzugsweise Zellulose können als Polymere der Glucose eingesetzt werden. Die Zellulose wird vorzugsweise in feinteiliger, sphärischer Form mit Durchmessern von 3 bis 50 µm, aber auch als Fasern verwendet, wie sie aus den Spinnprozessen der Zelluloseerzeugung handelsüblich im Kurzschnitt erhältlich sind. Als Polymere des Glucosamins sind bevorzugt Chitosan und Chitin zu nennen.

Als metallische Additive auf der Basis von Magnesium können vorteilhaft Magnesiumoxid (MgO), Magnesiumhydroxid (Mg(OH)₂), Magnesiumcarbonat (MgCO₃) und Magnesiumhydrogencarbonat (Mg(HCO₃)₂) eingesetzt werden. Auf der Basis von Aluminium ist Aluminiumhydroxid als Additiv zu nennen. Der Anteil der Oxide, Hydroxide und Carbonate des Magnesiums und Aluminiums am Gesamtgewicht des Polyurethanweichschaumstoffs beträgt 1 bis 15 %.

Die mineralischen Additive auf Zinkbasis sind bevorzugt Zinkoxid (ZnO), Zinkhydroxid (Zn(OH)₂), Zinkcarbonat (ZnCO₃) und Hydrozinkit (Zn₅(CO₃)₂(OH)₆). Diese Additive auf Zinkbasis werden feinteilig vorzugsweise mit einer spezifischen Oberfläche von < 3 m²/g und in einer Menge von 1 bis 15 % des Gesamtgewichts des Polyurethanweichschaumstoffs eingesetzt.

Allen diese Metallverbindungen ist gemeinsam, dass sie als dermatologisch unbedenklich und ungiftig eingestuft sind.

Selbstverständlich sind ohne Einschränkung der Erfindung inerte Zusatzstoffe, wie Calciumcarbonat, Talkum, Kaolin, organische und anorganische Farbpigmente, Fasern, Flammschutzmittel, Duftstoffe und dgl. einsetzbar.

Um die Wirkung der erfindungsgemäßen Maßnahmen gegenüber Hausstaubmilben zu überprüfen, wurden Versuche nach zwei unterschiedlichen Testverfahren A und B vorgenommen.

### Testverfahren A:

Eine Platte aus Polyurethanweichschaumstoff in den Abmessungen 8x8x5 cm wurde auf eine gleich große Glasplatte gelegt. Ins Zentrum dieser Platte wurden 50 adulte Hausstaubmilben gegeben, die unter dem Mikroskop genau ausgezählt wurden. Nicht adulte Stadien waren ebenfalls vorhanden, wurden jedoch nicht mitgezählt. Futter (siehe Methode B) wurde zugegeben. Auf die Platte wurde eine 5 mm dicke Glasplatte gelegt, die in der Mitte eine Öffnung mit 30 mm Durchmesser aufwies. Die Öffnung wurde mit Filterpapier abgedeckt und darauf eine Metallplatte gelegt, die in der Mitte ein mit der Glasplattenöffnung deckungsgleiches Loch aufwies. Mittels Halteklammern wurde der Versuchsaufbau fixiert, wonach die so hergestellte Probe 6 Wochen im Brutschrank bei 25 °C und bei wasserdampfgesättigter Luft bebrütet wurden. Nach dieser Zeit wurden die lebenden, erwachsenen Milben unter dem Mikroskop ausgezählt und die Verringerung gegenüber dem Ausgangswert in % festgestellt.

### Testverfahren B:

Beim Testverfahren nach AFNOR NF G 39-011 kommen pro Probe ebenfalls 50 adulte Hausstaubmilben, (Dermatophagoides pteronyssinus) zum Einsatz. Gefüttert werden die Milbenpopulationen mit einer Mischung aus Weizenkeimen und brauner Bierhefe. Die Proben wurden analog zum Testverfahren A über eine Prüfdauer von 6 Wochen behandelt, jedoch bei einer Temperatur von 17 bis 23 °C. Die Milben wurden mittels Wärmefluchtverfahren ausgezählt und die Reduktion gegenüber einem nicht erfindungsgemäß ausgerüsteten Schaumstoff in % festgehalten.

In der nachstehenden Tabelle wurden für insgeamt 10 Proben, die nach dem Testverfahren A oder B behandelt wurden die Testergebnisse zusammengefasst, wobei die Gewichtsanteile des Polyurethans und der jeweils verwendeten Stoffe am Gesamtgewicht des Polyurethanweichschaums in % angegeben wurden.

| Probe Nr. | 1 | 2 | 3 | 4 | 5 | 6 | 7 | 8 | 9 | 10 |
|---|---|---|---|---|---|---|---|---|---|---|
| Polyurethan | 90 | 88 | 87 | 91 | 90 | 90 | 89 | 90 | 86 | 89 |
| Zellulose | 3 | 3 | 3 | 3 | 4 | 3 | | | 4 | 3 |
| Cyclodextrin | | | 1 | 1 | | | | | | |
| Chitosan | | | | | | 2 | | | 1 | 1 |
| Polyamid 6,6 | | | | | | | 1 | 4 | | |
| Seide | | | | | | | 3 | | 1 | |
| ZnO | 4 | 4 | 4 | 4 | 3 | 3 | 3 | 3 | 4 | 5 |
| Zn(OH)₂ | | 1 | | | 1 | | | 1 | 2 | |
| Zn₅(CO₃)₂(OH)₆ | | | 1 | | | 1 | | | | |
| MgO | | 2 | | | | 1 | | | 1 | |
| Mg(OH)₂ | | | 1 | | | | | | | 1 |
| MgCO₃ | | | | | 2 | | | | | |
| Mg(HCO₃)₂ | 3 | | | 1 | | | 1 | | | 1 |
| Aluminiumhydroxid | | 2 | | | | | | 2 | 1 | |
| Lignin | | | 3 | | | | 3 | | | |
| Testverfahren | A | A | B | B | A | A | A | B | A | A |
| Milbenreduktion | 97 | 99 | 100 | 96 | 94 | 89 | 86 | 82 | 98 | 95 |

## Patentansprüche

1. Polyurethanweichschaumstoff mit Einlagerungen hydrophiler Polymere mit ausgeprägten Wasserstoffbrücken und gegebenenfalls von Zusatzstoffen, **dadurch gekennzeichnet, dass** zusätzlich zu den Einlagerungen der hydrophilen Polymere mineralische Additive aus der Gruppe von Metalloxiden, Hydroxiden und Carbonaten einerseits des Magnesiums und des Aluminiums und anderseits des Zinks eingebettet sind.

2. Polyurethanweichschaumstoff nach Anspruch 1, **dadurch gekennzeichnet, dass** als hydrophile Polymere wenigstens ein Polymer aus einer natürliche und synthetische Polyamide, Polymere der Glucose, Polymere des Glucosamins und Lignin umfassenden Gruppe in einem Gesamtanteil zwischen 1 und 25 % am Gesamtgewicht eingesetzt werden.

3. Polyurethanweichschaumstoff nach Anspruch 1 oder 2, **dadurch gekennzeichnet, dass** als metallische Additive auf der Basis von Magnesium Magnesiumoxid, Magnesiumhydroxid, Magnesiumcarbonat und Magnesiumhydrogencarbonat eingesetzt werden.

4. Polyurethanweichschaumstoff nach einem der Ansprüche 1 bis 3, **dadurch gekennzeichnet, dass** als metallische Additive auf der Basis von Aluminium Aluminiumhydroxid eingesetzt wird.

5. Polyurethanweichschaumstoff nach einem der Ansprüche 1 bis 4, **dadurch gekennzeichnet, dass** als metallische Additive auf der Basis von Zink Zinkoxid, Zinkhydroxid, Zinkcarbonat und Hydrozinkit eingesetzt werden.
